# EUROPEAN PATENT APPLICATION

(11) **EP 4 678 343 A1**
(43) Date of publication of application: **14.01.2026**
(21) Application number: 24188349.5
(22) Date of filing: 12.07.2024
(51) Int. Cl.: B25J 9/10, B25J 17/00, B25J 19/00

(54) **ROBOT JOINT ASSEMBLY**

(71) Applicant: Kassow Robots ApS, 2770 Kastrup (DK)
(72) Inventor: KASSOW, Kristian, 2300 Copenhagen S (DK)
(74) Representative: COPA Copenhagen Patents

(57) **Abstract**

A robot with a robotic arm, and a robot joint assembly for forming a joint of a robotic arm are disclosed. Further, a method for assembling a robot joint assembly is disclosed. The robot joint assembly comprises a housing, an output part, a motor comprising a rotor and a stator, the rotor turning a rotor shaft, a first rotor bearing assembly allowing rotational movement around the rotor axis between of rotor shaft. The disclosure further disclose means and elements for ensuring correct alignment between elements of the joint assembly and for facilitating ease of assembly.

## Description

The present disclosure relates to a robot, e.g. a robotic arm, and/or a robot joint assembly for such robot or robotic arm. More particularly, the present disclosure relates to an improved robot joint assembly for performing movement of the robot or robotic arm.

### BACKGROUND

Robots and in particular robotic arms are widely used to perform a wide variety of automated tasks. Recently, lightweight robots have increased in popularity for assisting human activities, e.g. in production facilities. These robots are commonly known as collaborative robots or cobots.

For robots, such as robotic arms, it is desirous to enhance flexibility and facilitate more compact robot solutions. It is a further objective to make robots and/or robotic arms lighter as well as easier and cheaper to manufacture. Furthermore, reliability and robustness of such lightweight robots is of continuous importance.

### SUMMARY

It is an object of the present disclosure at least to provide improvements of the prior art and/or to solve or reduce problems known from the prior art. It is a further object of the present disclosure to provide an advantageous or at least alternative robot, robotic arm, and/or components thereof.

More particularly, the present disclosure provides a solution, which facilitates a more compact robot joint assembly and in effect also a more compact robot. Furthermore, the present disclosure provides a solution, which simplifies production, in turn facilitating lower production costs, and lowering the risk of misalignment of elements, which might otherwise make the robot joint assembly work less efficiently. Hence, in effect, the present disclosure facilitates for a more efficient and reliable robot.

Accordingly, the present disclosure comprises a robotic arm and a robot comprising such robotic arm, wherein the robotic arm is extending between a base end and a tool end and comprising a base at the base end and a plurality of joints including a first joint and a second joint. The present disclosure also relates to a robot joint assembly, e.g. to form one of the plurality of joints of the disclosed robot, such as the first joint and/or the second joint. The present disclosure also relates to a method for assembling a robot joint assembly, such as the robot joint assembly as also disclosed.

The present invention is further defined by the appended set of claims.

### GENERAL DESCRIPTION

A robot is disclosed. The robot comprises a robotic arm extending between a base end and a tool end. The robotic arm comprises a base at the base end. The robotic arm may be configured for coupling with a tool at the tool end. For example, the robotic arm may comprise a tool flange, e.g. for connecting the tool, at the tool end.

The robotic arm comprises a plurality of joints connecting the base and the tool end. The plurality of joints may include a first joint and a second joint, and optionally one or more of a third joint, a fourth joint, a fifth joint, a sixth joint and a seventh joint. Each of the joints may enable the robotic arm to move, e.g. rotate, with respect to a respective axis. For example, the first joint may enable the robotic arm to move with respect to a first axis, e.g. the first joint may enable the robotic arm to rotate around the first axis. Similarly, the second joint may enable the robotic arm to move with respect to a second axis, e.g. the second joint may enable the robotic arm to rotate around the second axis. The third joint may enable the robotic arm to move with respect to a third axis, e.g. the third joint may enable the robotic arm to rotate around the third axis. The fourth joint may enable the robotic arm to move with respect to a fourth axis, e.g. the fourth joint may enable the robotic arm to rotate around the fourth axis. The fifth joint may enable the robotic arm to move with respect to a fifth axis, e.g. the fifth joint may enable the robotic arm to rotate around the fifth axis. The sixth joint may enable the robotic arm to move with respect to a sixth axis, e.g. the sixth joint may enable the robotic arm to rotate around the sixth axis. The seventh joint may enable the robotic arm to move with respect to a seventh axis, e.g. the seventh joint may enable the robotic arm to rotate around the seventh axis.

The first joint is positioned between the base and the second joint. The second joint may be positioned between the first joint and the tool end and/or between the first joint and the third joint. The third joint may be positioned between the second joint and the tool end and/or between the second joint and the fourth joint. The fourth joint may be positioned between the third joint and the tool end and/or between the third joint and the fifth joint. The fifth joint may be positioned between the fourth joint and the tool end and/or between the fourth joint and the sixth joint. The sixth joint may be positioned between the fifth joint and the tool end and/or between the fifth joint and the seventh joint. The seventh joint may be positioned between the sixth joint and the tool end, such as between the sixth joint and the tool flange at the tool end.

The robotic arm comprises a plurality of joint assemblies forming the plurality of joints. For example, the robotic arm may comprise a first joint assembly forming the first joint. The robotic arm may comprise a second joint assembly forming the second joint. The robotic arm may comprise a third joint assembly forming the third joint, a fourth joint assembly forming the fourth joint, a fifth joint assembly forming the fifth joint, a sixth joint assembly forming the sixth joint, and/or a seventh joint assembly forming the seventh joint. Each of the joint assemblies may extend along a respective joint axis, which may preferably coincide with the axis of rotation. Accordingly, the first joint assembly may extend along a first joint axis, which may be the first axis of the robotic arm. The second joint assembly may extend along a second joint axis, which may be the second axis of the robotic arm. The third joint assembly may extend along a third joint axis, which may be the third axis of the robotic arm. The fourth joint assembly may extend along a fourth joint axis, which may be the fourth axis of the robotic arm. The fifth joint assembly may extend along a fifth joint axis, which may be the fifth axis of the robotic arm. The sixth joint assembly may extend along a sixth joint axis, which may be the sixth axis of the robotic arm. The seventh joint assembly may extend along a seventh joint axis, which may be the seventh axis of the robotic arm.

A robot joint assembly is disclosed, which may form a joint of a robotic arm, such as the above-described robotic arm, extending between a base end and a tool end and comprising a base at the base end and a plurality of joints connecting the base and the tool end. The joint assembly extends along a joint axis between a primary joint assembly end and a secondary joint assembly end.

The disclosed joint assembly may be utilised as one or more or all of the first, second, third, fourth, fifth, sixth, and/or seventh joint assemblies of the disclosed robotic arm. Accordingly, the "joint axis" as referred to for the disclosed joint assembly may be the above mentioned respective first, second, third, fourth, fifth, sixth, and seventh joint axes when the disclosed joint assembly is utilised as the first, second, third, fourth, fifth, sixth, and seventh joint assemblies, respectively.

The joint assembly comprises a housing, an output part arranged at the secondary joint assembly end, and a motor comprising a rotor and a stator.

The joint assembly may comprise an output bearing assembly. The output bearing assembly may couple the output part and the housing. The output bearing assembly may allow rotational movement around the joint axis between the output part and the housing. The output bearing assembly may restrict and/or prevent movement other than rotational movement around the joint axis between the output part and the housing. The output bearing assembly may be a cross roller bearing. The output bearing assembly may comprise an inner part, an outer part, and a plurality of rollers disposed between the inner part and the outer part. The outer part may be fastened to the housing or may form (at least part of) the housing. The inner part may be fastened to the output part or may form (at least part of) the output part. The inner part of the output bearing assembly may comprise a centre aperture.

The joint assembly may comprise a strain wave gearing system. The strain wave gearing system comprises a flexspline extending along the joint axis between an open flexspline end and a flexspline base. The flexspline base may have a flexspline centre aperture. The flexspline may form a flexspline cavity. The flexspline may comprise, e.g. at the open flexspline end, an outer teething. The strain wave gearing system comprises a circular spline. The circular spline may be fastened to the housing, e.g. the circular spline may be integrally formed with a housing element part. The circular spline may be arranged to encircle the flexspline at the open flexspline end. The circular spline may comprise an inner teething, e.g. to engage with the outer teething of the flexspline. The strain wave gearing system comprises a wave generator. The wave generator may be fastened to the rotor shaft. The wave generator may be arranged inside the flexspline cavity at the open flexspline end.

The housing may comprise a primary housing end arranged towards the primary joint assembly end. The housing may comprise a secondary housing end arranged towards the secondary joint assembly end. In some examples, the primary housing end forms (at least part of) the secondary joint assembly end.

The rotor of the motor is turning a rotor shaft. The rotor may comprise the rotor shaft, the strain wave gearing system may comprise the rotor shaft, or the rotor shaft may be an independent element. The rotor may be connected to the rotor shaft. The rotor may comprise a rotor magnet, such as a permanent magnet. The motor may be a permanent magnet AC motor. The rotor shaft extends along a rotor axis from a primary rotor end to a secondary rotor end. The primary rotor end may be arranged towards the primary joint assembly end. The secondary rotor end may be arranged towards the secondary joint assembly end. The rotor axis may be coinciding with the joint axis. The rotor axis may be the joint axis. The rotor, the stator and the rotor shaft may be coaxially aligned with rotor axis and/or the joint axis.

The joint assembly may further comprise a coupling element. The coupling element may extend along the joint axis from a primary element end to a secondary element end. The primary element end may be arranged towards the primary joint assembly end. The secondary element end may be arranged towards the secondary joint assembly end. The coupling element has a primary coupling element part at the primary element end and a secondary coupling element part at the secondary element end. The primary coupling element part may form the primary element end. The secondary coupling element part may form the secondary element end. The coupling element may have a coupling element through hole along the joint axis. The coupling element through hole may extend through the primary element part and the secondary element part. The primary element part may have a primary internal diameter and a primary external diameter. The secondary element part may have a secondary internal diameter and a secondary external diameter. The primary internal diameter may be larger than the secondary internal diameter. The primary external diameter may be larger than the secondary external diameter. The rotor shaft may extend inside the primary element part. The primary element part may be arranged inside the flexspline cavity. The secondary element part may protrude through the flexspline centre aperture. The secondary element part may protrude through the centre aperture of the output bearing assembly.

The joint assembly may comprise one or more locking elements mechanically fastening together the primary coupling element part, the flexspline base, and the output part. In some examples, e.g. where an inner part of the output bearing assembly forms (at least part of) the output part or where the inner part of the output bearing assembly is fastened to the output part, the one or more locking elements may be mechanically fastening together the primary coupling element part, the flexspline base, and the inner part of the output bearing assembly. Thus, effectively, the one or more locking elements may mechanically fasten the primary coupling element part and the flexspline base to the output part by mechanically fastening to the inner part of the output bearing assembly.

The one or more locking elements may include one or more fasteners, e.g. including a first fastener. The one or more fasteners may be bolts. The first fastener may be a bolt. Each of the one or more fasteners, such as the first fastener, may extend along the joint axis between a head and a distal end and having a shank extending between the head and the distal end. The head may be arranged towards the secondary joint assembly end. The shank may be extending through the output part and the flexspline base. Alternatively or additionally, the shank may be extending through the inner part of the output bearing assembly. The distal end may be fastened to the coupling element.

The inner part of the output bearing assembly may comprise one or more counterbore holes accommodating the heads of the one or more fasteners, such as a first counterbore hole accommodating the head of the first fastener.

The joint assembly may comprise a first rotor bearing assembly. The first rotor bearing assembly may couple the rotor shaft with the housing or with the output part. The first rotor bearing assembly may allow rotational movement around the rotor axis between the rotor shaft and the housing or between the rotor shaft and the output part. The first rotor bearing assembly may restrict and/or prevent movement other than rotational movement around the joint axis between the rotor shaft and the housing or between the rotor shaft and the output part. The first rotor bearing assembly may be a ball bearing. In a preferred example, the first rotor bearing assembly may be arranged inside the primary element part of the coupling element. The first rotor bearing assembly may couple the coupling element and the rotor shaft. The first rotor bearing assembly may allow rotational movement around the rotor axis between the coupling element and the rotor shaft. The first rotor bearing assembly may restrict and/or prevent movement other than rotational movement around the joint axis between the coupling element and the rotor shaft.

The joint assembly may comprise a second rotor bearing assembly. The second rotor bearing assembly may couple the rotor shaft with the housing or with the output part. The second rotor bearing assembly may allow rotational movement around the rotor axis between the rotor shaft and the housing or between the rotor shaft and the output part. The second rotor bearing assembly may restrict and/or prevent movement other than rotational movement around the joint axis between the rotor shaft and the housing or between the rotor shaft and the output part. The second rotor bearing assembly may be a ball bearing. Preferably, one of the first and second rotor bearing assemblies couples the rotor shaft with the housing and the other of the first and second rotor bearing assemblies couples the rotor shaft with the output part. For example, the first rotor bearing assembly may couple the rotor shaft with the output part (e.g. via coupling between the rotor shaft and the coupling element), and the second rotor bearing assembly may couple the rotor shaft with the housing. Preferably, the wave generator is arranged between the first rotor bearing assembly and the second rotor bearing assembly, e.g. along the joint axis.

The joint assembly may comprise a first end assembly. The first end assembly may be mechanically fastened to the primary housing end. The first end assembly may have an end assembly centre aperture. The rotor shaft may extend into the end assembly centre aperture.

The first end assembly may be or may comprise a brake assembly. The brake assembly may be adapted to restrict rotational movement of the rotor shaft relative to the first end assembly. In effect, because the first end assembly may be mechanically fastened to the primary housing end, the brake assembly may be adapted to restrict rotational movement of the rotor shaft relative to the housing. The first end assembly may be or may comprise a sensor assembly. The rotor sensor assembly may be adapted to detect rotational position (e.g. including angular velocity and/or angular acceleration) of the rotor shaft relative to the first end assembly. In effect, because the first end assembly may be mechanically fastened to the primary housing end, the sensor assembly may be adapted to detect rotational position of the rotor shaft relative to the housing.

The first end assembly may be mechanically fastened to the primary housing end in a first position. The primary housing end and/or the first end assembly may be adapted to allow mechanical fastening of the first end assembly to the primary housing end in a plurality of positions including the first position and a second position. The second position may be offset relative to the first position, e.g. along a transversal direction perpendicular to the rotor axis and/or joint axis. For example, the second position may be offset by at least 0.10 mm relative to the first position along the transversal direction.

The joint assembly may comprise a third rotor bearing assembly. The third rotor bearing assembly may couple the rotor shaft with the housing, e.g. near the primary housing end. The third rotor bearing assembly may be arranged closer to the primary housing end than the first and/or second rotor bearing assembly. The second rotor bearing assembly may be arranged between the first rotor bearing assembly and the third rotor bearing assembly along the joint axis and/or along the rotor axis. The third rotor bearing assembly may allow rotational movement around the rotor axis between the rotor shaft and the housing. The third rotor bearing assembly may restrict and/or prevent movement other than rotational movement around the joint axis between the rotor shaft and the housing. The motor may be arranged between the first rotor bearing assembly and the third rotor bearing assembly along the joint axis and/or along the rotor axis, and/or the motor may be arranged between the second rotor bearing assembly and the third rotor bearing assembly along the joint axis and/or along the rotor axis. The third rotor bearing assembly may be a ball bearing. The first end assembly may comprise the third rotor bearing assembly. The third rotor bearing assembly may couple the rotor shaft with the first end assembly. The first end assembly may be fastened to the primary housing end, and thereby the third rotor bearing assembly may effectively couple the rotor shaft with the housing. The third rotor bearing assembly may allow rotational movement around the rotor axis between the rotor shaft and the first end assembly. The third rotor bearing assembly may restrict and/or prevent movement other than rotational movement around the joint axis between the rotor shaft and the first end assembly.

The first end assembly may comprise one or more fastening holes, e.g. including a first fastening hole, extending along the joint axis. The one or more fastening holes, such as the first fastening hole, may have a first hole diameter, e.g. measured along the transversal direction (perpendicular to the joint axis). The first end assembly may be mechanically fastened to the primary housing end by one or more fasteners, e.g. including a first fastener. The one or more fasteners may be bolts. The first fastener may be a bolt. The one or more fasteners, such as the first fastener, may extend along the joint axis. The one or more fasteners, such as the first fastener, may extend through the first fastening hole. The one or more fasteners, such as the first fastener, may have a first fastener diameter, e.g. measured along the transversal direction (perpendicular to the joint axis). The first hole diameter may be larger than the fastener diameter, such as more than 2% larger than the fastener diameter, such as more than 3% larger than the fastener diameter, such as more than 5% larger than the fastener diameter, such as more than 10% larger than the fastener diameter. By making the first hole diameter larger than the fastener diameter, the first end assembly is allowed to be fastened to the primary housing end in a plurality of individually offset positions. It should be appreciated that other ways may be utilized to allow the first end assembly to be fastened to the primary housing end in a plurality of individually offset positions.

One or more, or all of output bearing assembly, the rotor shaft, the flexspline, the circular spline, the wave generator, the coupling element, the first bearing assembly, the second bearing assembly, and the first end assembly may be coaxially aligned with the joint axis.

A method is also disclosed for assembling a robot joint assembly, such as the previously described joint assembly. The method comprises providing a primary joint assembly part extending along a joint axis between a primary joint assembly end and a secondary joint assembly end. The primary joint assembly part may be the joint assembly as described above, e.g. without the first end assembly. For example, the primary joint assembly part may comprise a housing, such as the above-described housing, having a primary housing end arranged at the primary joint assembly end. The primary joint assembly part may comprise an output part, such as the above-described output part, arranged at the secondary joint assembly end. The primary joint assembly part may comprise a motor, such as the above-described motor, comprising a rotor and a stator, where the rotor is turning a rotor shaft extending along a rotor axis from a primary rotor end to a secondary rotor end.

The primary joint assembly may further comprise the first rotor bearing assembly and/or the second rotor bearing assembly as described above. For example, the primary joint assembly may comprise the first rotor bearing assembly coupling the rotor shaft with the housing or the output part and allowing rotational movement around the rotor axis between the rotor shaft and the housing or the output part, and/or the second rotor bearing assembly coupling the rotor shaft with the housing or the output part and allowing rotational movement around the rotor axis between the rotor shaft and the housing or the output part.

The method further may comprise providing a first end assembly, such as the first end assembly, as previously described. For example, a first end assembly having an end assembly centre aperture. The primary housing end and/or the first end assembly may be adapted to allow mechanical fastening of the first end assembly to the primary housing end in a plurality of positions including a first position and a second position, as also described above. The second position may be offset relative to the first position along a transversal direction perpendicular to the joint axis.

The method further comprises arranging the first end assembly in the first position and such that the rotor shaft extends into the end assembly centre aperture, and mechanically fastening the first end assembly to the primary housing end in the first position. For example, the first end assembly may be mechanically fastened to the primary housing end by one or more fasteners, e.g. including a first fastener, as described above.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating exemplary joints,
Fig. 3 schematically illustrates half of a cross-sectional view of an exemplary robot joint assembly,
Fig. 4 schematically illustrates an exemplary coupling element,
Fig. 5 schematically illustrates an exemplary output bearing assembly,
Fig. 6 schematically illustrates an exemplary rotor bearing assembly,
Fig. 7 schematically illustrates end views of a primary housing end, and
Fig. 8 schematically illustrates end views of a first end assembly positioned to be fastened to a primary housing end.

### DETAILED DESCRIPTION

Various exemplary embodiments and details are described hereinafter with reference to the figures, when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment need not have all the aspects or advantages shown. An aspect or an advantage described in conjunction with a particular embodiment is not necessarily limited to that embodiment and can be practiced in any other embodiments even if not so illustrated, or if not so explicitly described.

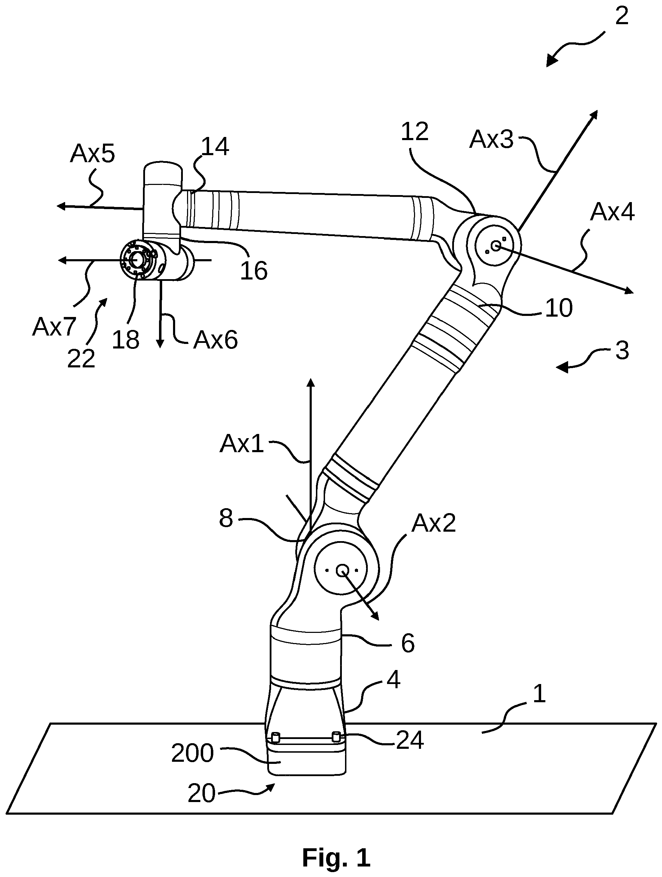

Fig. 1 is a schematic diagram illustrating an exemplary robot 2, which in the present example comprises a robotic arm 3, more particularly, a seven-axis robotic arm.

The robotic arm 3 extends between a base end 20 and a tool end 22 and comprises a base 4 at the base end 20. A tool flange for connection with a tool may preferably be arranged at the tool end 22 of the robotic arm. The robotic arm 3 further comprises a plurality of joints 6, 8, 10, 12, 14, 16, 18. The plurality of joints 6, 8, 10, 12, 14, 16, 18 connects the base 4 and the tool end 22. In the illustrated example, the plurality of joints are seven joints, i.e. including a first joint 6, a second joint 8, a third joint 10, a fourth joint 12, a fifth joint 14, a sixth joint 16 and a seventh joint 18. However, in other examples, the robotic arm may comprise fewer or more joints. For example, in another configuration, the robotic arm 3 may comprise only three joints, such as the first, second and third joints 6, 8, 10.

The first joint 6 is positioned between the base 4 and the second joint 8. The second joint 8 is positioned between the first joint 6 and the third joint 10. The third joint 10 is positioned between the second joint 8 and the fourth joint 12. The fourth joint 12 is positioned between the third joint 10 and the fifth joint 14. The fifth joint 14 is positioned between the fourth joint 12 and the sixth joint 16. The sixth joint 16 is positioned between the fifth joint 14 and the seventh joint 18. The seventh joint 18 is positioned between the sixth joint 16 and the tool end 22.

The plurality of joints 6, 8, 10, 12, 14, 16, 18 cause movement of the robotic arm 3, e.g. movement of the tool end 22 relative to the base end 20. Each joint provides for rotation about a respective axis. The first joint 6 provides for rotation about a first axis Ax1. The second joint 8 provides for rotation about a second axis Ax2. The third joint 10 provides for rotation about a third axis Ax3. The fourth joint 12 provides for rotation about a fourth axis Ax4. The fifth joint 14 provides for rotation about a fifth axis Ax5. The sixth joint 16 provides for rotation about a sixth axis Ax6. The seventh joint 18 provides for rotation about a seventh axis Ax7.

The robotic arm 3 may be put in some configurations, where none of the seven axes Ax1-Ax7 are parallel. However, in other configurations two or more of the seven axes Ax1-Ax7 may be parallel. As illustrated, the second axis Ax2 may be non-parallel with the first axis Ax1. The third axis Ax3 may be non-parallel with the second axis Ax2. The fourth axis Ax4 may be non-parallel with the third axis Ax3. The fifth axis Ax5 may be non-parallel with the fourth axis Ax4. The sixth axis Ax6 may be non-parallel with the fifth axis Ax5. The seventh axis Ax7 may be non-parallel with the sixth axis Ax6.

The robotic arm may comprise a plurality of motors, as described in more detail in relation to later figures, e.g. including a motor for each of the plurality of joints 6, 8, 10, 12, 14, 16, 18. Each of the plurality of motors may cause movement of a respective joint of the plurality of joints 6, 8, 10, 12, 14, 16, 18. For example, a first motor may cause movement of the first joint 6 with respect to the first axis Ax1. A second motor may cause movement of the second joint 8 with respect to the second axis Ax2. A third motor may cause movement of the third joint 10 with respect to the third axis Ax3, etc..

The robotic arm 3 is fastened at the base end 20 to a structure 1, which may be a factory floor or another structure from which the robotic arm 3 is meant to work. In some examples, the structure 1 may be part of a movable unit, such as a mobile robot or a vehicle, which would allow the robot 2 or at least the robotic arm 3 to be moved between different positions. The robotic arm 3 may be fastened to the structure 1 by fastening bolts 24.

As illustrated, the robot 2 further comprises a control unit 200, which in the present example may form an integral part of the base 4 of the robotic arm 3 or may be arranged between the base 4 and the structure 1.

Although being described in relation to a robotic arm 3 being operable relative to seven axes, the present disclosure may alternatively be applied to a robot having only six axes, or even fewer axes. For example, with respect to the example illustrated in Fig. 1, movement around the third axis Ax3 may be omitted to obtain a robot operable relative to six axes.

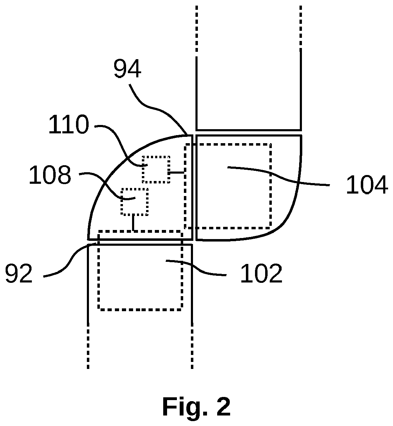

Fig. 2 is a schematic diagram illustrating two exemplary joints 92, 94, e.g. a primary joint 92 and a secondary joint 94. The exemplary joints 92, 94 may be two successive joints of the plurality of joints 6, 8, 10, 12, 14, 16, 18 indicated in Fig. 1. For example, the primary joint 92 may be the first joint 6 of Fig. 1 and the secondary joint 94 may be the second joint 8 of Fig. 1.

Also illustrated is a primary motor 102 provided to rotate the primary joint 92. A secondary motor 104 is provided to rotate the secondary joint 94. Thus, the primary motor 102 may be a first motor for causing movement of the first joint 6 with respect to the first axis Ax1 of Fig. 1. The secondary motor 104 may be a second motor for causing movement of the second joint 8 with respect to the second axis Ax2 of Fig. 1. The primary motor 102 and/or the secondary motor 104 may be a permanent magnet AC motor. Furthermore, the primary motor 102 and/or the secondary motor 104 may comprise or be integrated with a gear assembly, e.g. an integral gear, such as a strain wave gear. Hence, the primary motor 102 and/or the secondary motor 104 may be or may form part of a gear motor.

One or more motor controller units 108, 110 may be provided and adapted to control the motors 102, 104. A primary motor controller unit 108 may be adapted to control the primary motor 102. A secondary motor controller unit 110 may be adapted to control the secondary motor 104.

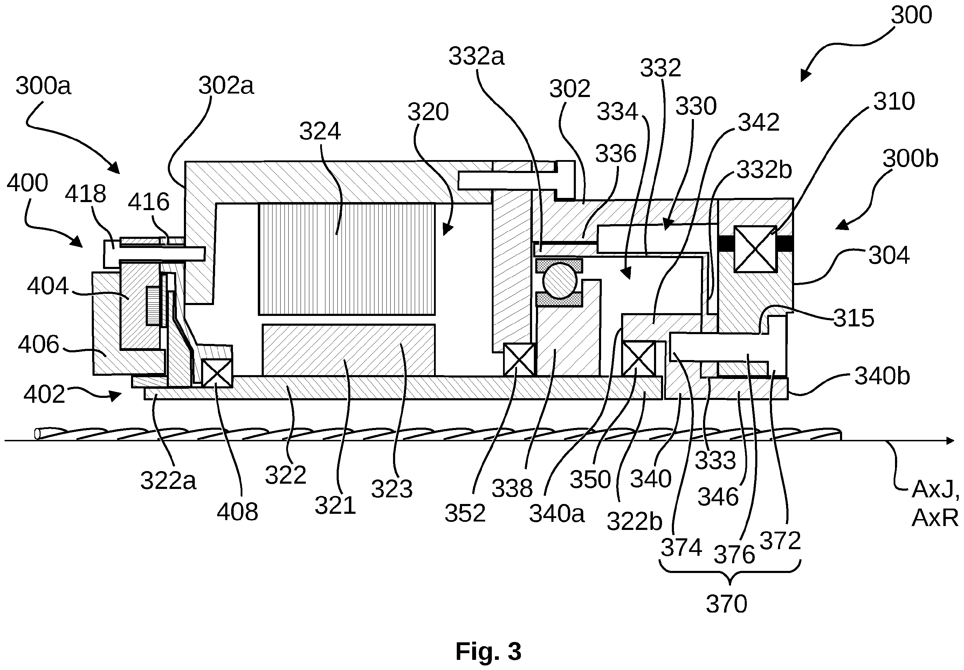

Fig. 3 schematically illustrates half of a cross-sectional view of an exemplary robot joint assembly 300 for forming a joint of a robotic arm, such as any of the joints 6, 8, 10, 12, 14, 16, 18 of the robotic arm 3 of Fig. 1, and/or the primary joint 92 or the secondary joint 94 of Fig. 2. The cross-sectional view is seen with a joint axis AxJ of the joint assembly 300 extending left-right in the Figure. The joint assembly 300 is generally symmetrical along the joint axis AxJ, and therefore, only half of the cross section is shown.

The joint assembly 300 extends along the joint axis AxJ between a primary joint assembly end 300a and a secondary joint assembly end 300b. The joint assembly 300 comprises a housing 302 and an output part 304. In the illustrated example, the output part 304 is arranged at the secondary joint assembly end 300b. The housing 302 has a primary housing end 302a. The primary housing end 302a is arranged towards the primary joint assembly end 300a, e.g. opposite the output part 304.

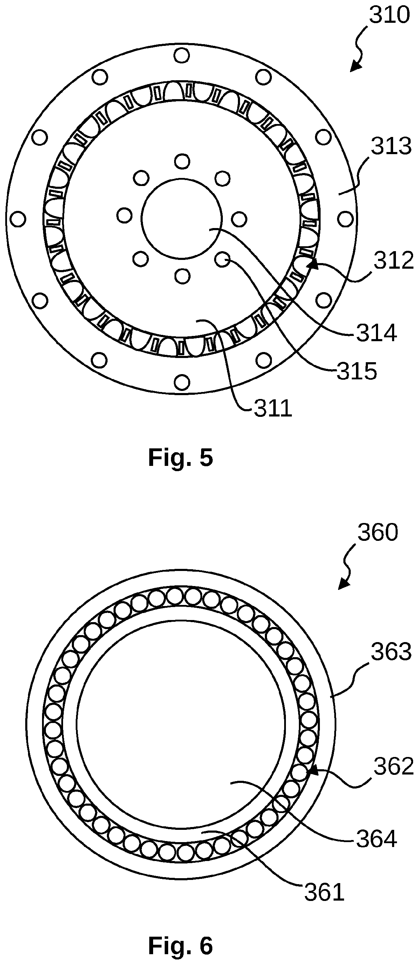

The joint assembly 300 further comprises an output bearing assembly 310 coupling the output part 304 and the housing 302, while allowing rotational movement around the joint axis AxJ between the output part 304 and the housing 302. The output bearing assembly 310 may be a cross roller bearing as further exemplified in Fig. 5.

The joint assembly 300 comprises a motor 320 with a rotor 321 and a stator 324. The motor 320 is causing movement between the housing 302 and the output part 304. The rotor 321 is turning, a rotor shaft 322. The rotor shaft 322 may be a part of the rotor 321. In other examples, the rotor shaft 322 may form part of a gearing assembly of the joint assembly 300. In still further examples the rotor shaft 322 may be an independent element. Hence, in some examples, the rotor 321 may comprise the rotor shaft 322. In other examples, the rotor 321 may be connected to the rotor shaft 322. The rotor 321 may comprise a rotor magnet 323. The rotor magnet 323 may be a permanent magnet. The rotor shaft 322 extends along a rotor axis AxR, which in the presently illustrated example is the same as the joint axis AxJ, from a primary rotor end 322a to a secondary rotor end 322b. The rotor 321, the rotor shaft 322 and the stator 314 are coaxially aligned along the rotor axis AxR, and in the presently illustrated example also coaxially aligned along the joint axis AxJ.

The joint assembly 300 further comprises a strain wave gearing system 330. The gearing system 330 translates the movement of the motor 320 to movement between the housing 302 and the output part 304. In some examples, other gearing systems, as known in the art, might alternatively or additionally be utilized. The strain wave gearing system 330 comprises a flexspline 332 extending along the joint axis AxJ between an open flexspline end 332a and a flexspline base 332b. The flexspline base 332 has a flexspline centre aperture 333. The flexspline 332 is forming a flexspline cavity 332. The flexspline centre aperture 333 provides an opening into the flexspline cavity 332 at the flexspline base 332b. The open flexspline end 332a opens into the flexspline cavity 332. In the present example, the flexspline open flexspline end 332a is arranged towards the primary joint assembly end 300a and the flexspline base 332b is arranged towards the secondary joint assembly end 300b.

The strain wave gearing system 330 further comprises a circular spline 336 and a wave generator 338. The circular spline 336 is fastened to the housing 302. The circular spline 336 is arranged to encircle the flexspline 332 at the open flexspline end 332a. As will be known to the skilled person, the flexspline comprises an outer teething at the open flexspline end 332a engaging with an inner teething of the circular spline 336. The wave generator 338 is fastened to the rotor shaft 322 and is arranged inside the flexspline cavity 334 at the open flexspline end 332a.

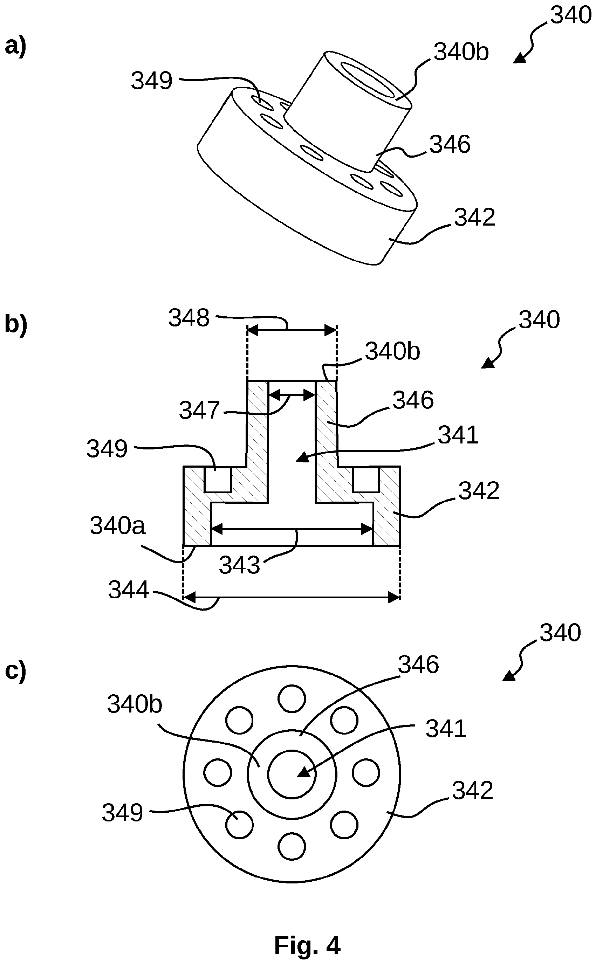

The joint assembly 300 further comprises a coupling element 340. The exemplary coupling element 340 is further described in relation to Fig. 4. The coupling element 340 extends along the joint axis AxJ from a primary element end 340a to a secondary element end 340b. The coupling element 340 has a primary coupling element part 342 at the primary element end 340a and a secondary coupling element part 346 at the secondary element end 340b. As can also be seen in the figure, the primary element part 342 has an internal diameter and an external diameter respectively larger than an internal diameter and an external diameter of the secondary element part 346.

The rotor shaft 322 extends inside the primary element part 342. Furthermore, the primary element part 342 is arranged inside the flexspline cavity 334 and the secondary element part 346 protrudes through the flexspline centre aperture 333.

The joint assembly further comprises a first rotor bearing assembly 350. The first rotor bearing assembly 350 is arranged inside the primary element part 342 of the coupling element 340. The first rotor bearing assembly 350 couples the coupling element 342 and the rotor shaft 322, while allowing rotational movement around the rotor axis AxR between the coupling element 340 and the rotor shaft 322.

The joint assembly further comprises one or more locking elements 370, such as one or more fasteners, such as one or more bolts, mechanically fastening together the primary coupling element part 342, the flexspline base 332b, and the output part 304. In some examples, as will be described in more detail in relation to Fig. 5, the output part 304 may be, at least partly, formed by an inner part of the output bearing assembly 310, and hence, the primary coupling element part 342, the flexspline base 332b, and the inner part of the output bearing assembly 310 may be mechanically fastened together.

The one or more locking elements 370 may include a fastener extending along the joint axis AxJ between a head 372 and a distal end 374 and having a shank 376 extending between the head 372 and the distal end 374. As illustrated, the head is preferably arranged towards the secondary joint assembly end 300b. The shank 376 is extending through the output part 304 and the flexspline base 332b, and the distal end 374 of the fastener is fastened to the coupling element 340. It is clear that the joint assembly may comprise a plurality of such fasteners distributed, e.g. equidistantly, around the joint axis AxJ.

The coupling element 340 provides the advantage that a single element, i.e. the coupling element 340, aligns the output bearing assembly 340, the flexspline 332, and the first rotor bearing assembly 350. Furthermore, these elements are all aligned by fastening of a single set of locking elements 370. Thus, the risk of misalignment between the output bearing assembly 340, the flexspline 332, and the first rotor bearing assembly 350 is reduced to a minimum. Furthermore, as can be seen from the illustration, the present arrangement eases assembly by the mechanical fastening together of these elements may be performed by a single set of locking elements 370. Further, the fastening of the locking elements 370 may be performed from the easily accessible secondary joint assembly end 300b.

As illustrated, the joint assembly 300 may comprise a second rotor bearing assembly 352. The second rotor bearing assembly 352 couples the housing 302 and the rotor shaft 322 while allowing rotational movement around the rotor axis AxR between the housing 302 and the rotor shaft 322. Preferably, as illustrated, the wave generator 338 is arranged between the first rotor bearing assembly 350 and the second rotor bearing assembly 352, e.g. along the joint axis AxJ and/or rotor axis AxR.

As illustrated, the joint assembly 300 may further comprise a first end assembly 400, which may be or may comprise a rotor brake assembly, a rotor sensor assembly and/or similar. For example, the first end assembly 400 may comprise a rotor brake assembly 404 adapted to restrict rotational movement of the rotor shaft 322 relative to the first end assembly 400. For example, the rotor brake assembly 404 may be configured such that it brakes and/or restricts movement of the rotor shaft 322 relative to the first end assembly 400 (in effect relative to the housing 322 since the first end assembly 400 is fastened thereto) when the robot is powered off, and e.g. by utilization of a solenoid, may allow movement of the rotor shaft 322 relative to the first end assembly 400 when the robot is powered on. Alternatively, or additionally, the first end assembly 400 may comprise a rotor sensor assembly 406 adapted to detect rotational position of the rotor shaft 322 relative to the first end assembly 400 (in effect relative to the housing 322 since the first end assembly 400 is fastened thereto). The rotor sensor assembly 406 may comprise one or more magnetic field sensors configured to measure one or more magnetic fields of one or more pole rings arranged at the rotor shaft 322.

The first end assembly 400 has an end assembly centre aperture 402. The rotor shaft 322 extends into the end assembly centre aperture 402. The first end assembly 400 is mechanically fastened to the primary housing end 302a. For example, the first end assembly 400 may be mechanically fastened to the primary housing end 302a by one or more fasteners 418, e.g. a bolt, extending along the joint axis AxJ and extending through a respective fastening hole 416 of the first end assembly 400.

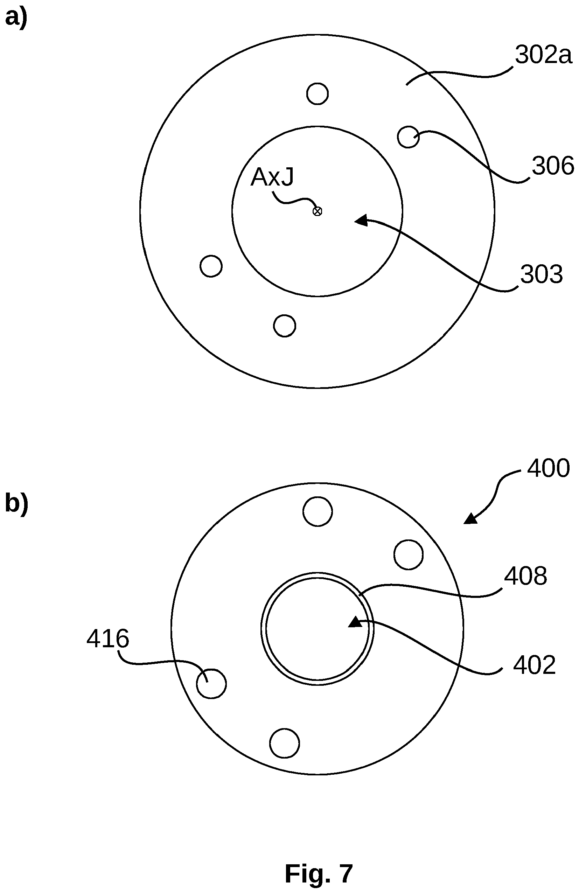

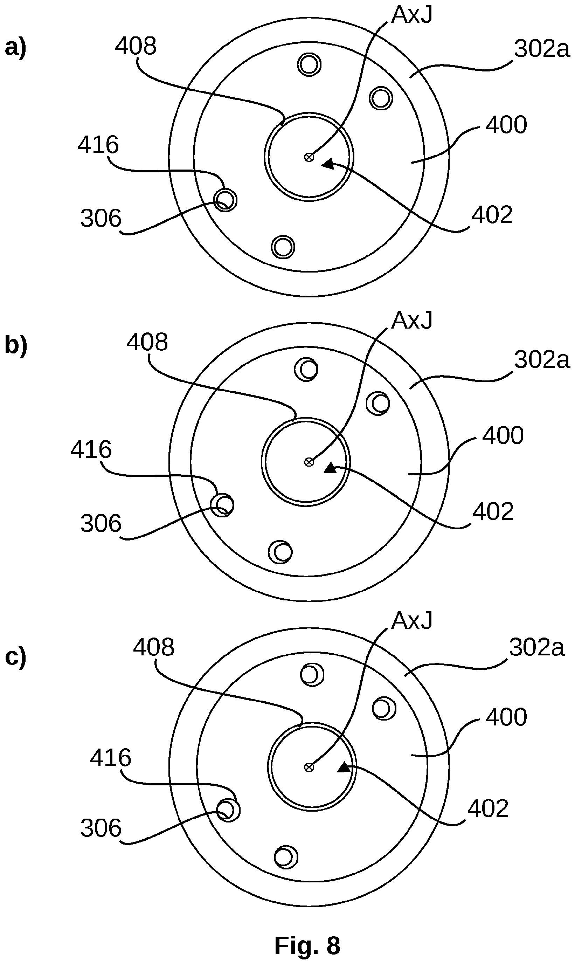

The first end assembly 400 is mechanically fastened to the primary housing end 302a in a first position, but may, e.g. by the fastening holes 416 of the first end assembly 400 being slightly oversized, be repositioned to be fastened to the primary housing end 302a in a second position, which is offset relative to the first position along a transversal direction perpendicular to the rotor axis AxR and/or the joint axis AxJ. This is further elaborated in relation to Figs. 7 and 8.

The first end assembly 400 may comprise a third rotor bearing assembly 408. The third rotor bearing assembly 408 couples the rotor shaft 322 with the first end assembly 400 while allowing rotational movement around the rotor axis AxR between the rotor shaft 322 and the fist end assembly 400. By providing the third rotor bearing assembly 408 as part of the first end assembly 400. By also allowing the first end assembly 400 to be mechanically fastened to the primary housing end 302a at slightly offset positions, it may be realised that the third rotor bearing assembly 408 will be aligned with the first and second bearing assemblies 350, 352. Thus, a minor misalignment between the first and second rotor bearing assemblies 350, 352, relative to the joint axis AxJ or rotor axis AxR, will be tolerated by the third rotor bearing assembly, which may be positioned to anyhow be in alignment with the first and second rotor bearing assemblies 350, 352.

Any or all of the rotor bearing assemblies, such as the first rotor bearing assembly 350, the second rotor bearing assembly 352, and/or the third rotor bearing assembly 408 may be a ball bearing as further exemplified in Fig. 6.

Fig. 4 schematically illustrates an exemplary coupling element 340. In Fig. 4a a perspective view of the exemplary coupling element 340 is illustrated. In Fig. 4b a cross-sectional view of the exemplary coupling element 340 is illustrated, while in Fig. 4c a top view, i.e. from the secondary element end 340b, of the exemplary coupling element 340 is illustrated.

As already mentioned, the coupling element 340 extends from a primary element end 340a to a secondary element end 340b and has a primary coupling element part 342 at the primary element end 340a and a secondary coupling element part 346 at the secondary element end 340b.

The coupling element 340 has a coupling element through hole 341 extending from the primary element end 340a to the secondary element end 340b. Hence, when arranged in the joint assembly 300 as illustrated in Fig. 3, the coupling element through hole 341 may extend along the joint axis AxJ. The primary element part 342 has a primary internal diameter 343 and a primary external diameter 344. As also seen in the figure, the primary internal diameter 343 may be an internal diameter 343 of the coupling element through hole 341 in the primary element part 342. The secondary element part has a secondary internal diameter 347 and a secondary external diameter 348. The secondary internal diameter 347 may, as also seen in the figure, be an internal diameter 347 of the coupling element through hole 341 in the secondary element part 346. The primary internal diameter 343 is larger than the secondary internal diameter 347. The primary external diameter 342 is larger than the secondary external diameter 348.

The primary element part 342 may comprise one or more fastening holes 349. The fastening holes 349 may be adapted to receive the distal end of a fastener, such as the fastener 370 as illustrated in Fig. 3. The distal end of such fastener(s) may be fastened to the coupling element 340 by engagement with the fastening holes 349.

Fig. 5 schematically illustrates an exemplary output bearing assembly 310, such as the output bearing assembly 310 coupling the output part 304 and the housing 302 of the joint assembly 300, as described in relation to Fig. 3.

The output bearing assembly 310 may comprise an inner part 311, an outer part 313, and a plurality of rollers 312 disposed between the inner part 311 and the outer part 313. The output bearing assembly may be a cross roller bearing, i.e. the rollers 312 may be cylindrical rollers alternatingly angled +/- 45 degrees relative to the rotation axis of the bearing assembly.

The outer part 313 is fastened to the housing 302 of the joint assembly 300 (cf. Fig. 3) or may form part of the housing 300. The inner part 311 may be fastened to the output part 304 of the joint assembly (cf. Fig. 3). However, alternatively, and as illustrated in Fig. 3, the inner part 311 of the output bearing assembly 310 may (at least partly) form the output part 304. The inner part 311 of the output bearing assembly 310 may comprise holes 315 facilitating by one or more locking elements mechanically fastening of the inner part 311 together with the primary coupling element part 342 and the flexspline base 332b. For example, the shank 376 of the fastener 370 may extend through a respective hole 315 of the inner part 311 of the output bearing assembly 310. Thus, as illustrated in Fig. 3, the one or more locking elements 370 may mechanically fasten together the primary coupling element part 342, the flexspline base 332b, and the inner part 311 of the output bearing assembly 310. In some examples, the holes 315 may be counterbore holes for accommodating the head of the fasteners. In some examples, the holes 315 may be indented, e.g. relative to the remainder of surface of the inner part 311, to accommodate the head of the fasteners.

The inner part 311 of the output bearing assembly 310 comprises a centre aperture 314. When the bearing assembly is arranged in the joint assembly 300, as illustrated in Fig. 3, the secondary element part 346 of the coupling element 340 may protrude through the centre aperture 314 of the output bearing assembly 310.

Fig. 6 schematically illustrates an exemplary rotor bearing assembly 360, which may be one or more or all of the first, second and/or third rotor bearing assemblies 350, 352, 408, as mentioned previously. The rotor bearing assembly 360 comprises an inner part 361, an outer part 363 and a plurality of rollers 362 (e.g. balls) disposed between the inner part 361 and the outer part 363. The rotor bearing assembly may be a ball bearing, i.e. the rollers 362 may be balls or spheres.

The rotor bearing assembly 360 has a centre aperture 364 defined by the inner part 361. When being arranged as the first, second, and/or third rotor bearing assembly 350, 352, 408, as illustrated in Fig. 3, the rotor shaft 322 extends through the centre aperture 364, and the inner part 361 is attached to the rotor shaft 322. The outer part 363 is attached to the inside of the primary coupling element part 342 in the case of the first rotor bearing assembly 350. The outer part 363 is attached to the housing 302 in the case of the second rotor bearing assembly 352. The outer part 363 is attached to the first end assembly 400 in the case of the third rotor bearing assembly 408.

Fig. 7 schematically illustrates end views of the primary housing end 302a in Fig. 7a and the first end assembly 400 in Fig. 7b. The joint axis AxJ is extending into the sheet.

As illustrated in Fig. 7a, the primary housing end 302a may comprise a housing centre aperture 303 and one or more housing attachment holes 306. The housing attachment holes 306 may have a dimension to allow a fastener, e.g. a bolt, of a desired size to be fastened to the primary housing end 302a by engagement with the housing attachment holes 306. The housing attachment holes 306 may be provided with an internal threading.

As illustrated in Fig. 7b, the first end assembly 400 may comprise an end assembly centre aperture 402. The end assembly centre aperture 402 may be smaller than the housing centre aperture 303 of the primary housing end 302a. Furthermore, the first end assembly 400 comprises the third rotor bearing assembly 408 to fit to the rotor shaft of the joint assembly. The third rotor bearing assembly 408, such as the inner part 361 (cf. Fig. 6), may form the end assembly centre aperture 402. When being arranged as part of the joint assembly 300, as illustrated in Fig. 3, the rotor shaft 322 may extend into the end assembly centre aperture 402.

The first end assembly 400 comprises one or more fastening holes 416. The fastening holes may extend in a direction along the rotor axis AxR and/or joint axis AxJ, when arranged as part of the joint assembly 300 as illustrated in Fig. 3. The first end assembly 400 may be mechanically fastened to the primary housing end 302a by one or more fasteners extending (along the joint axis AxR) through the fastening holes 416 and being fastened to the primary housing end 302a, e.g. being fastened by engagement with the housing attachment holes 306.

The fastening holes 416 has a hole diameter, which is larger than a diameter of the fastener to be used when fastening the first end assembly 400 to the primary housing end 302a. This may be visually realised in the present example by the fastening holes 416 of the first end assembly 400 having a larger diameter than the housing attachment holes 306 of the primary housing end 302a. For example, the fastening holes 416 may have a hole diameter which is at least 2%, 3%, 5% or 10% larger than the diameter of the fastener to be used and/or than the diameter of the housing attachment holes 306.

By the fastening holes 416 being oversized, the first end assembly 400 may be adapted to allow mechanical fastening to the primary housing end 302a in a plurality of positions, which are offset relative to each other along a transversal direction perpendicular to the rotor axis and/or joint axis. However, it should be clear that other ways exist for facilitating fastening the first end assembly 400 to the primary housing end 302a in a plurality of positions. For example, the housing attachment holes 306 may also (or alternatively) be oversized and fastening of the first end assembly may be provided by a bolt and nut connection.

Fig. 8 schematically illustrates end views of the first end assembly 400 positioned to be fastened to the primary housing end 302a. As mentioned previously, the first end assembly 400 and/or the primary housing end 302a may be adapted to allow mechanical fastening of the first end assembly 400 to the primary housing end 302a in a plurality of positions. The joint axis AxJ of the joint assembly 300 (cf.Fig. 3) is extending into the sheet.

Fig. 8a illustrates the first end assembly 400 being positioned in a near perfectly aligned position relative to the primary housing end 302a, which may be seen by the fastening holes 416 of the first end assembly 400 being concentric with the housing attachment holes 306 of the primary housing end 302a.

Fig. 8b illustrates the first end assembly 400 being positioned in another position relative to the primary housing end 302a, where the first end assembly 400 is positioned more to the left relative to position illustrated in Fig. 8a.

Fig. 8c illustrates the first end assembly 400 being positioned in yet another position relative to the primary housing end 302a, where the first end assembly 400 is positioned more to the right relative to position illustrated in Fig. 8a.

Thus, as can be realised from Fig. 8, the first end assembly 400 may be mechanically fastened to the primary housing end 302a in a plurality of positions, e.g. including a first position (e.g Fig. 8a) and a second position (e.g. Fig. 8b), and optionally a third position (e.g. Fig. 8c). As seen, the second position (Fig. 8b) is offset relative to the first position (Fig. 8a) along a transversal direction perpendicular to the joint axis AxJ (and/or rotor axis AxR). Similarly, the third position (Fig. 8c) is offset relative to the first position (Fig. 8a) and the second position (Fig. 8b) along the transversal direction perpendicular to the joint axis AxJ (and/or rotor axis AxR).

Accordingly, a method for assembling a robot joint assembly, such as the robot joint assembly 300 of Fig. 3, may comprise providing a primary joint assembly part, e.g. the robot joint assembly 300 of Fig. 3 without the first end assembly 400. The method may further comprise providing the first end assembly 400, e.g. as illustrated in Fig. 7b, and arranging the first end assembly 400 in a first position of a plurality of positions, e.g. one of the positions illustrated in Figs 8a-8c, and such that the rotor shaft 322 extends into the end assembly centre aperture 402. The method may further comprise mechanically fastening the first end assembly 400 to the primary housing end 302a in the first position, e.g. by fasteners extending through the fastening holes 416 of the first end assembly 400 and into respective housing attachment holes 306 of the primary housing end 302a.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### ITEMS

Some exemplary embodiments of the present disclosure are set out in the following items:
1. A robot joint assembly for forming a joint of a robotic arm extending between a base end and a tool end and comprising a base at the base end and a plurality of joints connecting the base and the tool end, the joint assembly extending along a joint axis between a primary joint assembly end and a secondary joint assembly end and comprising:
   - a housing,
   - an output part arranged at the secondary joint assembly end,
   - an output bearing assembly coupling the output part and the housing and allowing rotational movement around the joint axis between the output part and the housing,
   - a motor comprising a rotor and a stator, the rotor turning a rotor shaft extending along a rotor axis from a primary rotor end to a secondary rotor end,
   - a strain wave gearing system comprising:
      - a flexspline extending along the joint axis between an open flexspline end and a flexspline base with a flexspline centre aperture, the flexspline is forming a flexspline cavity,
      - a circular spline fastened to the housing, and being arranged to encircle the flexspline at the open flexspline end, and
      - a wave generator fastened to the rotor shaft and being arranged inside the flexspline cavity at the open flexspline end,
   the joint assembly further comprising:
   - a coupling element extending along the joint axis from a primary element end to a secondary element end, the coupling element having a primary coupling element part at the primary element end and a secondary coupling element part at the secondary element end, the primary element part having a primary internal diameter and a primary external diameter, the secondary element part having a secondary internal diameter and a secondary external diameter, the primary internal diameter being larger than the secondary internal diameter, the primary external diameter being larger than the secondary external diameter, the rotor shaft extending inside the primary element part, the primary element part being arranged inside the flexspline cavity, the secondary element part protruding through the flexspline centre aperture,
   - a first rotor bearing assembly arranged inside the primary element part of the coupling element and coupling the coupling element and the rotor shaft allowing rotational movement around the rotor axis between the coupling element and the rotor shaft, and
   - one or more locking elements mechanically fastening together the primary coupling element part, the flexspline base, and the output part.
2. Robot joint assembly according to any of the preceding items, wherein the one or more locking elements includes a first fastener, e.g. a bolt, extending along the joint axis between a head and a distal end and having a shank extending between the head and the distal end, wherein the head is arranged towards the secondary joint assembly end, the shank is extending through the output part and the flexspline base, and the distal end is fastened to the coupling element.
3. Robot joint assembly according to any of the preceding items, wherein the output bearing assembly is a cross roller bearing.
4. Robot joint assembly according to any of the preceding items, wherein the output bearing assembly comprises an inner part, an outer part, and a plurality of rollers disposed between the inner part and the outer part, wherein the outer part is fastened to or forms, at least part of, the housing and the inner part forms, at least a part of, the output part.
5. Robot joint assembly according to item 4, wherein the inner part of the output bearing assembly comprises a centre aperture and the secondary element part of the coupling element is protruding through the centre aperture of the output bearing assembly.
6. Robot joint assembly according to any of items 4-5, wherein the one or more locking elements are mechanically fastening together the primary coupling element part, the flexspline base, and the inner part of the output bearing assembly.
7. Robot joint assembly according to any of items 4-6 at least according to item 2, the shank is extending through the inner part of the output bearing assembly.
8. Robot joint assembly according to item 7, wherein the inner part of the output bearing assembly comprises a first counterbore hole accommodating the head of the first fastener.
9. Robot joint assembly according to any of the preceding items comprising a second rotor bearing assembly coupling the housing and the rotor shaft allowing rotational movement around the rotor axis between the housing and the rotor shaft, and wherein the wave generator is arranged between the first rotor bearing assembly and the second rotor bearing assembly.
10. A robot joint assembly for forming a joint of a robotic arm extending between a base end and a tool end and comprising a base at the base end and a plurality of joints connecting the base and the tool end, the joint assembly extending along a joint axis between a primary joint assembly end and a secondary joint assembly end and comprising:
   - a housing having a primary housing end arranged towards the primary joint assembly end,
   - an output part arranged at the secondary joint assembly end,
   - a motor comprising a rotor and a stator, the rotor turning a rotor shaft extending along a rotor axis from a primary rotor end to a secondary rotor end,

   the joint assembly further comprising:
      - a first rotor bearing assembly coupling the rotor shaft with the housing or the output part and allowing rotational movement around the rotor axis between the rotor shaft and the housing or the output part, and
      - a second rotor bearing assembly coupling the rotor shaft with the housing or the output part and allowing rotational movement around the rotor axis between the rotor shaft and the housing or the output part,
   the joint assembly further comprising a first end assembly having an end assembly centre aperture, the first end assembly being mechanically fastened to the primary housing end, and the rotor shaft extending into the end assembly centre aperture,
   wherein the first end assembly is mechanically fastened to the primary housing end in a first position and wherein the primary housing end and/or the first end assembly is/are adapted to allow mechanical fastening of the first end assembly to the primary housing end in a plurality of positions including the first position and a second position, and wherein the second position is offset relative to the first position along a transversal direction perpendicular to the joint axis.
11. Robot joint assembly according to item 10, wherein the first end assembly comprises a third rotor bearing assembly coupling the rotor shaft with the first end assembly and allowing rotational movement around the rotor axis between the rotor shaft and the first end assembly.
12. Robot joint assembly according to any of items 10-11, wherein the second position is offset by at least 0.10 mm relative to the first position along the transversal direction.
13. Robot joint assembly according to any of items 10-12, wherein the first end assembly comprises one or more fastening holes including a first fastening hole extending along the joint axis, the first fastening hole having a first hole diameter along the transversal direction, wherein the first end assembly is mechanically fastened to the primary housing end by one or more fasteners including a first fastener, e.g. a bolt, extending along the joint axis and extending through the first fastening hole, the first fastener having a first fastener diameter along the transversal direction, and wherein the first hole diameter is more than 2% larger than the fastener diameter.
14. Robot joint assembly according to any of items 10-13, wherein the joint assembly comprises a strain wave gearing system, the strain wave gearing system comprising a flexspline, a circular spline, and a wave generator, and wherein the wave generator is fastened to the rotor shaft and arranged between the first rotor bearing assembly and the second rotor bearing assembly.
15. Robot joint assembly according to any of items 10-14, wherein the first end assembly comprises a rotor brake assembly adapted to restrict rotational movement of the rotor shaft relative to the first end assembly.
16. Robot joint assembly according to any of items 10-15, wherein the first end assembly comprises a rotor sensor assembly adapted to detect rotational position of the rotor shaft relative to the first end assembly.
17. A robot comprising a robotic arm extending between a base end and a tool end and comprising a base at the base end and a plurality of joints including a first joint and a second joint, the plurality of joints connecting the base and the tool end, wherein the robotic arm comprises a first joint assembly according to the robot joint assembly of any of the preceding items, and wherein the first joint assembly extends along a first joint axis and forms the first joint.
18. Robot according to item 17, wherein the robotic arm comprises a second joint assembly according to the robot joint assembly of any of items 1-16, and wherein the second joint assembly extends along a second joint axis and forms the second joint.
19. Method for assembling a robot joint assembly for forming a joint of a robotic arm extending between a base end and a tool end and comprising a base at the base end and a plurality of joints connecting the base and the tool end,
   the method comprising providing a primary joint assembly part extending along a joint axis between a primary joint assembly end and a secondary joint assembly end and comprising:
      - a housing having a primary housing end arranged at the primary joint assembly end,
      - an output part arranged at the secondary joint assembly end,
      - a motor comprising a rotor and a stator, the rotor turning a rotor shaft extending along a rotor axis from a primary rotor end to a secondary rotor end,
      - a first rotor bearing assembly coupling the rotor shaft with the housing or the output part and allowing rotational movement around the rotor axis between the rotor shaft and the housing or the output part, and
      - a second rotor bearing assembly coupling the rotor shaft with the housing or the output part and allowing rotational movement around the rotor axis between the rotor shaft and the housing or the output part,
   the method further comprises:
      - providing a first end assembly having an end assembly centre aperture, wherein the primary housing end and/or the first end assembly are adapted to allow mechanical fastening of the first end assembly to the primary housing end in a plurality of positions including a first position and a second position, wherein the second position is offset relative to the first position along a transversal direction perpendicular to the joint axis,
      - arranging the first end assembly in the first position and such that the rotor shaft extends into the end assembly centre aperture, and
      - mechanically fastening the first end assembly to the primary housing end in the first position.

### LIST OF REFERENCES

- 1: structure
- 2: robot
- 3: robotic arm
- 4: base
- 6: first joint
- 8: second joint
- 10: third joint
- 12: fourth joint
- 14: fifth joint
- 16: sixth joint
- 18: seventh joint
- 20: base end
- 22: tool end
- 24: fastening bolts
- 92: primary joint
- 94: secondary joint
- 102: primary motor
- 104: secondary motor
- 108: primary processing unit
- 110: secondary processing unit
- 200: control unit

- 300: robot joint assembly
- 300a: primary joint assembly end
- 300b: secondary joint assembly end
- 302: housing
- 302a: primary housing end
- 303: housing centre aperture
- 304: output part
- 306: housing attachment holes
- 310: output bearing assembly
- 311: inner part of output bearing assembly
- 312: rollers of output bearing assembly
- 313: outer part of output bearing assembly
- 314: centre aperture
- 315: hole
- 320: motor
- 321: rotor
- 322: rotor shaft
- 322a: primary rotor end
- 322b: secondary rotor end
- 323: rotor magnet
- 324: stator
- 330: strain wave gearing system
- 332: flexspline
- 332a: open flexspline end
- 332b: flexspline base
- 333: flexspline centre aperture
- 334: flexspline cavity
- 336: circular spline
- 338: wave generator
- 340: coupling element
- 340a: primary element end
- 340b: secondary element end
- 341: coupling element through hole
- 342: primary coupling element part
- 343: primary internal diameter
- 344: primary external diameter
- 346: secondary coupling element part
- 347: secondary internal diameter
- 348: secondary external diameter
- 349: fastening holes
- 350: first rotor bearing assembly
- 352: second rotor bearing assembly
- 360: rotor bearing assembly
- 361: inner part of rotor bearing assembly
- 362: rollers of rotor bearing assembly
- 363: outer part of rotor bearing assembly
- 364: centre aperture
- 370: locking element/fastener
- 372: head
- 374: distal end
- 376: shank

- 400: end assembly
- 402: end assembly centre aperture
- 404: rotor brake assembly
- 406: rotor sensor assembly
- 408: third rotor bearing assembly
- 416: fastening hole
- 418: fastener

- Ax1: first axis
- Ax2: second axis
- Ax3: third axis
- Ax4: fourth axis
- Ax5: fifth axis
- Ax6: sixth axis
- Ax7: seventh axis

- AxJ: joint axis
- AxR: rotor axis

## Claims

1. A robot joint assembly for forming a joint of a robotic arm extending between a base end and a tool end and comprising a base at the base end and a plurality of joints connecting the base and the tool end, the joint assembly extending along a joint axis between a primary joint assembly end and a secondary joint assembly end and comprising:
- a housing,
- an output part arranged at the secondary joint assembly end,
- an output bearing assembly coupling the output part and the housing and allowing rotational movement around the joint axis between the output part and the housing,
- a motor comprising a rotor and a stator, the rotor turning a rotor shaft extending along a rotor axis from a primary rotor end to a secondary rotor end,
- a strain wave gearing system comprising:
- a flexspline extending along the joint axis between an open flexspline end and a flexspline base with a flexspline centre aperture, the flexspline is forming a flexspline cavity,
- a circular spline fastened to the housing, and being arranged to encircle the flexspline at the open flexspline end, and
- a wave generator fastened to the rotor shaft and being arranged inside the flexspline cavity at the open flexspline end,
the joint assembly further comprising:
- a coupling element extending along the joint axis from a primary element end to a secondary element end, the coupling element having a primary coupling element part at the primary element end and a secondary coupling element part at the secondary element end, the primary element part having a primary internal diameter and a primary external diameter, the secondary element part having a secondary internal diameter and a secondary external diameter, the primary internal diameter being larger than the secondary internal diameter, the primary external diameter being larger than the secondary external diameter, the rotor shaft extending inside the primary element part, the primary element part being arranged inside the flexspline cavity, the secondary element part protruding through the flexspline centre aperture,
- a first rotor bearing assembly arranged inside the primary element part of the coupling element and coupling the coupling element and the rotor shaft allowing rotational movement around the rotor axis between the coupling element and the rotor shaft, and
- one or more locking elements mechanically fastening together the primary coupling element part, the flexspline base, and the output part.

2. Robot joint assembly according to any of the preceding claims, wherein the one or more locking elements includes a first fastener, e.g. a bolt, extending along the joint axis between a head and a distal end and having a shank extending between the head and the distal end, wherein the head is arranged towards the secondary joint assembly end, the shank is extending through the output part and the flexspline base, and the distal end is fastened to the coupling element.

3. Robot joint assembly according to any of the preceding claims, wherein the output bearing assembly comprises an inner part, an outer part, and a plurality of rollers disposed between the inner part and the outer part, wherein the outer part is fastened to or forms, at least part of, the housing and the inner part forms, at least a part of, the output part.

4. Robot joint assembly according to claim 3, wherein the inner part of the output bearing assembly comprises a centre aperture and the secondary element part of the coupling element is protruding through the centre aperture of the output bearing assembly.

5. Robot joint assembly according to any of claims 3-4, wherein the one or more locking elements are mechanically fastening together the primary coupling element part, the flexspline base, and the inner part of the output bearing assembly.

6. Robot joint assembly according to any of claims 3-5 at least according to claim 2, the shank is extending through the inner part of the output bearing assembly.

7. Robot joint assembly according to any of the preceding claims comprising a second rotor bearing assembly coupling the housing and the rotor shaft allowing rotational movement around the rotor axis between the housing and the rotor shaft, and wherein the wave generator is arranged between the first rotor bearing assembly and the second rotor bearing assembly.

8. A robot joint assembly for forming a joint of a robotic arm extending between a base end and a tool end and comprising a base at the base end and a plurality of joints connecting the base and the tool end, the joint assembly extending along a joint axis between a primary joint assembly end and a secondary joint assembly end and comprising:
- a housing having a primary housing end arranged towards the primary joint assembly end,
- an output part arranged at the secondary joint assembly end,
- a motor comprising a rotor and a stator, the rotor turning a rotor shaft extending along a rotor axis from a primary rotor end to a secondary rotor end,
the joint assembly further comprising:
- a first rotor bearing assembly coupling the rotor shaft with the housing or the output part and allowing rotational movement around the rotor axis between the rotor shaft and the housing or the output part, and
- a second rotor bearing assembly coupling the rotor shaft with the housing or the output part and allowing rotational movement around the rotor axis between the rotor shaft and the housing or the output part,
the joint assembly further comprising a first end assembly having an end assembly centre aperture, the first end assembly being mechanically fastened to the primary housing end, and the rotor shaft extending into the end assembly centre aperture,
wherein the first end assembly is mechanically fastened to the primary housing end in a first position and wherein the primary housing end and/or the first end assembly is/are adapted to allow mechanical fastening of the first end assembly to the primary housing end in a plurality of positions including the first position and a second position, and wherein the second position is offset relative to the first position along a transversal direction perpendicular to the joint axis.

9. Robot joint assembly according to claim 8, wherein the first end assembly comprises a third rotor bearing assembly coupling the rotor shaft with the first end assembly and allowing rotational movement around the rotor axis between the rotor shaft and the first end assembly.

10. Robot joint assembly according to any of claims 8-9, wherein the second position is offset by at least 0.10 mm relative to the first position along the transversal direction.

11. Robot joint assembly according to any of claims 8-10, wherein the first end assembly comprises one or more fastening holes including a first fastening hole extending along the joint axis, the first fastening hole having a first hole diameter along the transversal direction, wherein the first end assembly is mechanically fastened to the primary housing end by one or more fasteners including a first fastener, e.g. a bolt, extending along the joint axis and extending through the first fastening hole, the first fastener having a first fastener diameter along the transversal direction, and wherein the first hole diameter is more than 2% larger than the fastener diameter.

12. Robot joint assembly according to any of claims 8-11, wherein the first end assembly comprises a rotor brake assembly adapted to restrict rotational movement of the rotor shaft relative to the first end assembly, and/or wherein the first end assembly comprises a rotor sensor assembly adapted to detect rotational position of the rotor shaft relative to the first end assembly.

13. A robot comprising a robotic arm extending between a base end and a tool end and comprising a base at the base end and a plurality of joints including a first joint and a second joint, the plurality of joints connecting the base and the tool end, wherein the robotic arm comprises a first joint assembly according to the robot joint assembly of any of the preceding claims, and wherein the first joint assembly extends along a first joint axis and forms the first joint.

14. Robot according to claim 13, wherein the robotic arm comprises a second joint assembly according to the robot joint assembly of any of claims 1-12, and wherein the second joint assembly extends along a second joint axis and forms the second joint.

15. Method for assembling a robot joint assembly for forming a joint of a robotic arm extending between a base end and a tool end and comprising a base at the base end and a plurality of joints connecting the base and the tool end,
the method comprising providing a primary joint assembly part extending along a joint axis between a primary joint assembly end and a secondary joint assembly end and comprising:
- a housing having a primary housing end arranged at the primary joint assembly end,
- an output part arranged at the secondary joint assembly end,
- a motor comprising a rotor and a stator, the rotor turning a rotor shaft extending along a rotor axis from a primary rotor end to a secondary rotor end,
- a first rotor bearing assembly coupling the rotor shaft with the housing or the output part and allowing rotational movement around the rotor axis between the rotor shaft and the housing or the output part, and
- a second rotor bearing assembly coupling the rotor shaft with the housing or the output part and allowing rotational movement around the rotor axis between the rotor shaft and the housing or the output part,
the method further comprises:
- providing a first end assembly having an end assembly centre aperture, wherein the primary housing end and/or the first end assembly are adapted to allow mechanical fastening of the first end assembly to the primary housing end in a plurality of positions including a first position and a second position, wherein the second position is offset relative to the first position along a transversal direction perpendicular to the joint axis,
- arranging the first end assembly in the first position and such that the rotor shaft extends into the end assembly centre aperture, and
- mechanically fastening the first end assembly to the primary housing end in the first position.
